# EUROPÄISCHE PATENTSCHRIFT

(11) **EP 2 566 747 B1**
(45) Veröffentlichungstag und Bekanntmachung des Hinweises auf die Patenterteilung: **30.08.2017**
(21) Anmeldenummer: 11714045.9
(22) Anmeldetag: 13.04.2011
(51) Int. Cl.: B62M 6/50, B60L 3/00, B62M 6/45

(54) **VERFAHREN ZUR ZUSTANDSERKENNUNG VON PEDALSENSOREN EINES FAHRRADS MIT ELEKTROANTRIEB SOWIE STEUERUNGSVORRICHTUNG HIERFÜR**
METHOD FOR SENSORCHECK OF A BICYCLE WITH ELECTRIC DRIVE AND SYSTEM THEREFORE
MÉTHODE POUR LA RECONNAISSANCE DE L'ÉTAT D'UN CAPTEUR D'UNE BICYCLETTE ELECTRIQUE ET SON SYSTÈME

(30) Priorität: 06.05.2010 DE 102010028644
(43) Veröffentlichungstag der Anmeldung: 13.03.2013
(73) Patentinhaber: Robert Bosch GmbH, 70442 Stuttgart (DE)
(72) Erfinder: DURDEVIC, Ivica, 72124 Pliezhausen (DE); DASBACH, Gregor, F-14120 Mondeville (FR); ZYWIETZ, Martin, 71642 Ludwigsburg (DE); KIMMICH, Peter, 71101 Schoenaich (DE); KOHLRAUSCH, Philipp, 70180 Stuttgart (DE)
(86) Internationale Anmeldenummer: PCT/EP2011/055779
(87) Internationale Veröffentlichungsnummer: WO 2011/138138

(56) Entgegenhaltungen:
- EP-A1- 0 635 423
- DE-T2- 69 500 285
- JP-A- H09 286 377
- JP-A- 2005 132 275
- JP-A- 2006 078 304

## Beschreibung

### Stand der Technik

Die Erfindung betrifft Fahrräder mit elektrischem Zusatzantrieb, wobei derartige Fahrräder bekannt sind, bei denen die Stärke des zusätzlichen elektrischen Antriebs durch die Pedale des Fahrrads gesteuert wird.

Aus WO 08/138320 ist bekannt, dass die Pedale des Fahrrads mit Sensoren zur Erfassung des Drehmoments und der Drehzahl ausgerüstet werden, um aus beiden Größen die vom Fahrer ausgeübte Leistung zu berechnen und anhand dieser Leistung den Zusatzantrieb anzusteuern.

In DE 199 49 225 A1 wird beschrieben, den zeitlichen Verlauf eines erfassten Drehmoments, das der Fahrer auf die Pedale ausübt, zum Einstellen eines Fahrmodus des elektrischen Antriebs zu verwenden.

Bei beiden Varianten, d. h. bei der Verwendung des Produkts aus Drehmoment und Drehzahl sowie bei der Betrachtung der Drehzahl alleine führen fehlerhafte Sensorwerte automatisch zu einer falschen Ansteuerung, die gegebenenfalls zu gefährlichen Situationen im Straßenverkehr führen kann. Da die Sensoren an exponierter Lage, d. h. an der Tretkurbel bzw. an den Pedalen angeordnet sind, ergibt sich jedoch für die Sensoren eine hohe Fehleranfälligkeit, da üblicherweise auf diese Fahrradkomponenten eine hohe mechanische Belastung ausgeübt wird. Ferner kann auch eine Kapselung nicht vollständig verhindern, dass die Sensoren beispielsweise durch Witterungseinflüsse beeinträchtigt werden.

Es ergibt sich daher bei der Verwendung der Steuergrößen Drehzahl und Drehmoment am Pedal gemäß bekannter Verfahren das Problem, dass aufgrund von Sensorfehlern ein unerwünschter Fahrbetrieb eingestellt wird, wodurch der Fahrradfahrer oder seine Umwelt gefährdet werden können. Es ist daher eine Aufgabe der Erfindung, ein Verfahren und eine Vorrichtung vorzusehen, mit dem/der elektrische Zusatzantrieb von Fahrrädern auf sichere Weise angesteuert werden kann. Die Schrift DE 695 00 285 T2 offenbart alle Merkmalen des Oberbegriffs des Anspruchs 7. Aus der Schrift DE 695 00 285 T2 ist ein elektrisch unterstütztes Fahrrad bekannt, bei dem eine Tretkrafterfassungseinrichtung vorgesehen ist, welche ein Erfassungssignal ausgibt. Ausgehend von diesem Erfassungssignal wird je nach über- oder unterschreiten eines Schwellenspannungswerts VTH entschieden, ob der Antriebsmotor normal oder beschränkt betrieben wird. Darüber hinaus ist ein Kurbelwellengeschwindigkeitssensor vorgesehen, der ein Signal ausgibt, welches eine Drehgeschwindigkeit der Kurbelwelle angibt. Das Hauptsteuersystem bzw. die CPU gibt auf Grundlage des Erfassungssignals und dem die Drehgeschwindigkeit des Kurbelwelle repräsentierendes Signal ein Motortreibersignal aus. Dabei überwacht die CPU die Drehgeschwindigkeit der Kurbelwelle über die Pulsdauer des Signals. Die Einstellung des Betriebs des Antriebsmotors wird jedoch in der Motorantriebsbegrenzungseinrichtung durchgeführt, die ihrerseits ein Signal von der CPU nutzt.

### Offenbarung der Erfindung

Diese Aufgabe wird gelöst durch das Verfahren in Anspruch 1 und die Steuerungsvorrichtung von Anspruch 7. Das der Erfindung zugrunde liegende Konzept ist es, sowohl Drehzahl der Pedale als auch das Drehmoment des Fahrers zu erfassen, das auf die Pedale wirkt und anhand einer dieser Größen die andere zu plausibilisieren. Da bei der Betätigung der Pedale durch den Fahrer üblicherweise beide Größen gleichermaßen beeinflusst werden, sind beide Größen miteinander verknüpft, so dass anhand dieser Verknüpfung ein Sensorfehler zur Erfassung einer dieser Größen erkannt werden kann, wenn beide Größen miteinander verglichen werden.

Wenn beispielsweise der Fahrer selbst für Antrieb sorgt, so sind sowohl Drehzahl als auch Drehmoment größer null. Wenn in dieser Situation beispielsweise der Drehzahlmesser fehlerhaft ist, so kann dies erkannt werden, da üblicherweise mit einem Drehmoment größer null nach einer kurzen Verzögerung auch eine Drehzahl größer null einhergeht. Dies trifft auch für den umgekehrten Fall zu, wenn beispielsweise der Drehmomentsensor defekt ist und trotz Betätigung der Pedale einen Drehmomentwert von null erzeugt, wobei jedoch die Pedale mit einer Drehzahl größer null betätigt werden. In diesem Fall kann auf einen defekten Drehmomentsensor geschlossen werden. Die Plausibilisierung wird vorgesehen, indem aus beiden Signalen, d. h. aus dem Drehzahlsensorsignal und aus dem Drehmomentsensorsignal jeweils ein Pedalantriebszustand ermittelt wird. Hierbei kann der Pedalantriebszustand beispielsweise einen der zwei folgenden Werte annehmen: ruhend und betätigt. Ergeben sich unterschiedliche Pedalantriebszustände anhand der Sensorsignale, dann wird auf einen Fehler geschlossen. Daher werden die beiden Pedalantriebszustände, die aus den beiden Sensorsignalen getrennt voneinander ermittelt wurden, miteinander verglichen, wobei bei unterschiedlichen Pedalantriebszuständen ein Fehlersignal ausgegeben wird. Dadurch wird der Zustand der Pedalsensoren erfasst, wobei der Zustand der Pedalsensoren einen von zwei Werten aufweisen kann, beispielsweise "fehlerhaft" oder "funktionsfähig".

Daher sieht das erfindungsgemäße Verfahren zur Zustandserfassung von Pedalsensoren eines Fahrrads mit Elektroantrieb vor, ein Drehzahlsensorsignal mittels eines Drehzahlsensors sowie ein Drehmomentsensorsignal mittels eines Drehmomentsensors vorzusehen. Sowohl Drehzahlsensor als auch Drehmomentsensor sind Pedalsensoren des Fahrrads. Vorzugsweise sind die Pedalsensoren an der Kurbelwelle oder an den Pedalen angebracht. Hierbei kann der Drehzahlsensor durch einen Drehgeber vorgesehen sein, beispielsweise einen optischen oder induktiven Drehgeber, und der Drehmomentsensor kann als Kraftsensor, beispielsweise ein Dehnungsmessstreifen vorgesehen sein.

Erfindungsgemäß sieht das Verfahren ferner vor, einen ersten Pedalantriebszustand anhand des Drehzahlsensorsignals zu ermitteln sowie, getrennt hiervon, einen zweiten Pedalantriebszustand anhand des Drehmomentsensorsignals zu ermitteln. Da die beiden Pedalantriebszustände mit unterschiedlichen Sensoren erfasst werden, können diese zum gegenseitigen Abgleich verwendet werden, um einen fehlerhaften Sensor zu erfassen. Erfindungsgemäß wird ferner der erste Pedalantriebszustand mit dem zweiten Pedalantriebszustand verglichen und ein Fehlersignal wird vorgesehen, wenn die beiden Pedalantriebszustände unterschiedlich sind. Die Pedalantriebszustände können binärer Natur sein und einen Pedalruhezustand von einem Bewegungszustand bzw. Betätigungszustand der Pedale unterscheiden. Das Fehlersignal gibt somit wieder, dass die beiden Sensoren zu unterschiedlichen Betriebseinschätzungen führen, die das Ergebnis eines defekten Sensors sind.

In einigen Fahrsituationen können die beiden Pedalantriebszustände unterschiedlich sein, auch wenn die Sensoren funktionstüchtig sind. Wenn beispielsweise das Fahrrad rollt und die Pedale betätigt werden, ohne dass jedoch der Freilauf geschlossen ist (d. h. Mittreten ohne Kraftübertragung), oder im Stand, wenn ein Fuß auf einem Pedal ruht, dieses jedoch nicht bewegt wird, ergeben sich trotz korrekter Sensorsignale unterschiedliche Einschätzungen des Pedalantriebszustands. Um dadurch ausgelöste unzutreffende Fehlersignale zu vermeiden, wird vorzugsweise das erfindungsgemäße Verfahren ausgeführt, wenn das Elektrofahrrad mit dem Elektroantrieb angetrieben wird. Insbesondere wird das Drehmomentsensorsignal nur dann vorgesehen, während das Elektrofahrrad mit dem Elektroantrieb angetrieben wird, wobei die erfindungsgemäße Auswertung (Ermitteln des zugehörigen Pedalantriebszustands und Vergleichen der Pedalantriebszustände) nur bei aktiv verwendetem Elektroantrieb durchgeführt wird. Alternativ oder in Kombination hiermit kann auch das Drehzahlsensorsignal, anhand dessen der erste Pedalantriebszustand ermittelt wird, nur dann vorgesehen werden, während der Elektroantrieb zur Bewegung des Fahrrads beiträgt.

In einer weiteren Ausführungsform werden sowohl die Pedalantriebszustände ermittelt, als auch diese verglichen, auch wenn der Elektroantrieb nicht aktiv ist, wobei jedoch das Fehlersignal nur dann erzeugt oder weitergeleitet wird, wenn der Elektroantrieb auch aktiv ist. Eine weitere Ausführungsform sieht vor, dass nur einer der Schritte des Ermittelns und des Vergleichens ausgeführt wird, wenn der Elektroantrieb nicht aktiv ist, so dass zumindest eine Komponente des Verfahrens nicht ausgeführt wird, wenn der Elektroantrieb nicht aktiv ist und alle Komponenten des Verfahrens nur dann ausgeführt werden, wenn der Elektroantrieb aktiv ist.

Eine weitere Größe, die bei der erfindungsgemäßen Zustandserfassung als Eingangsgröße berücksichtigt werden kann, ist die Fahrgeschwindigkeit des Fahrzeugs (d.h. des Elektrofahrrads). Diese kann anstatt oder in Kombination mit der elektrischen Zusatzleistung des Elektroantriebs bzw. dem Aktivierungszustand des Elektroantriebs verwendet werden. Beispielsweise kann nur dann ein Fehlersignal abgegeben werden (bei entsprechenden Sensorsignalen), wenn die Fahrgeschwindigkeit über einem Mindestschwellwert liegt. Insbesondere kann der Einfluss der Fahrgeschwindigkeit auf die erfindungsgemäßen Zustandserfassung wiederum von der Fahrgeschwindigkeit selbst abhängen, um unterschiedliche logische Kombinationen der Sensorsignale oder der daraus gewonnenen Zustände für verschiedene Fahrgeschwindigkeitsbereiche vorzusehen.

Die erfindungsgemäße Zustandserfassung kann grundsätzlich von den Eingangsgrößen Pedaldrehmoment M, Pedaldrehzahl N, Fahrgeschwindigkeit v und Drehzahl des Motors des Elektroantriebs abhängen, wobei M und N vorzugsweise immer berücksichtigt werden. Die erfindungsgemäße Zustandserfassung kann auf einer (logischen) Entscheidungsmatrix basieren, bei der zunächst die Eingangsgrößen in Klassen kategorisiert werden, bsp. durch Einteilung der Größe in unterschiedliche Intervalle, bsp. mittels eines Schwellwertvergleichs. Die Matrix sieht für Kombinationen der Klassen, die jeweils bestimmten Fahrzuständen entsprechen, logische Verknüpfungen vor, deren Ergebnisse jeweils eine Aussage über den Fehlerzustand geben. Die logischen Verknüpfungen geben ein Normverhalten wieder, um bei Abweichungen von dem Normverhalten auf einen Fehler zu schließen. So kann beispielsweise für hohe Geschwindigkeiten v eine andere Auswertung der restlichen Eingangsgrößen vorgenommen werden, als bei geringen Geschwindigkeiten v. Es ist nicht notwendig, dass alle Eingangsgrößen in jeder Kombination der Matrix eine Rolle spielen, wobei jedoch Pedaldrehmoment M und Pedaldrehzahl N in jedem Fall innerhalb der Matrix miteinander logisch Verknüpft werden

Der Pedalantriebszustand wird anhand des zugehörigen Sensorsignals durch Vergleichen mit einem Mindestschwellwert erfasst. Wenn das Drehzahlsensorsignal über einem vorgegebenen Mindestschwellwert liegt, wird von einem aktiven Pedalantrieb ausgegangen und ansonsten wird von einem fehlenden Pedalantrieb (keine Leistungsübertragung von Pedal auf Fahrrad) ausgegangen. Als erster Pedalantriebszustand wird ein aktiver Pedalantrieb nur dann angenommen, wenn das Drehzahlsensorsignal über einem vorgegebenen Mindestdrehzahlschwellwert liegt, und ein aktiver Pedalantrieb wird als zweiter Pedalantriebszustand nur dann angenommen, wenn das Drehmomentsensorsignal über einem vorgegebenen Mindestdrehmomentschwellwert liegt. Andernfalls wird von einem fehlenden Pedalantrieb ausgegangen.

Zur Ermittlung des Pedalantriebszustands kann das jeweilige Momentansensorsignal verwendet werden, d. h. das Momentandrehzahlsensorsignal oder das Momentandrehmomentsensorsignal. Vorzugsweise wird jedoch insbesondere zur Ermittlung des zweiten Pedalantriebszustands ein aktueller Spitzen-Spitzenwert angenommen, der sich zwischen dem relativen Maximum und dem relativen Minimum des momentanen Drehmomentsensorsignals ergibt. Mit anderen Worten wird vorzugsweise der volle Amplitudenhub verwendet, um das Drehmomentsensorsignal zu beurteilen. In gleicher Weise kann auch das Drehzahlsensorsignal beurteilt werden. Ferner kann ein zeitlich gemittelter Wert des Sensorsignals verwendet werden, insbesondere ein zeitlich gemittelter Drehmomentwert des Drehmomentsensorsignals, um so als Kriterium die Leistung des Drehmomentsensorsignals zu verwenden, um den zweiten Pedalantriebszustand zu ermitteln. In gleicher Weise kann auch ein gemittelter Drehmomentsensorsignalwert verwendet werden, um den ersten Pedalantriebszustand zu ermitteln.

Vorzugsweise wird als Drehzahlsensorsignal die Winkeländerungsrate betrachtet, wobei sinusförmige Schwankungen, die für den normalen Fahrbetrieb üblich sind, erfasst werden, indem ein Spitzen-Spitzenwert der Winkeländerungsrate als Kriterium verwendet wird, um aus den Schwankungen auf die Oszillationen im Fahrerdrehmoment zu schließen. Hierbei ist ein Spitzen-Spitzenwert vorzugsweise die Differenz zwischen einem relativen Maximum und einem vorhergehenden relativen Minimum des jeweiligen Signals, vorzugsweise das unmittelbar vorhergehende oder unmittelbar folgende Minimum bzw. Maximum. Als Alternative hierzu kann die Differenz von relativem Maximum bzw. relativem Minimum zu einer Nulllinie betrachtet werden, wobei die Nulllinie dem Gleichanteil des Signals entspricht. Ferner kann der Signalverlauf, insbesondere die Schwankungen des Signalverlaufs des jeweiligen Sensorsignals, betrachtet werden und mit dem Verlauf des zweiten Sensors verglichen werden, um zu ermitteln, ob die Sensoren funktionieren.

Der Drehzahlverlauf oder der Drehmomentverlauf der Pedalsensoren kann ferner erfasst werden durch Betrachtung des entsprechenden Signals über mehrere Perioden. Werden für den Drehzahlverlauf und/oder den Drehmomentverlauf unterschiedliche Amplituden, Periodendauern oder Leistungen für unterschiedliche Perioden erfasst, so kann auf einen Sensorfehler geschlossen werden. Unterscheiden sich die Schwankungsbreiten, bsp. bei nahezu konstantem Sinusverlauf bei dem Drehmoment, während die Drehzahl einen schwankenden Sinusverlauf zeigt (d.h. mit unterschiedlichen Periodendauern, Amplituden oder Leistungen für unterschiedliche Perioden), der bei menschlicher Pedalbetätigung üblich ist, kann auf einen Fehler geschlossen werden. Hierbei sind Drehmoment und Drehzahl vertauschbar. Grundsätzlich kann als Sensorsignal ein Momentansignal selbst, ein über ein Zeitfenster gemitteltes Signal, eine (erste) zeitliche Ableitung des Signals oder einen Spitzen-Spitzenwert des Signals herangezogen werden, um den ersten bzw. zweiten Pedalantriebszustand zu ermitteln. Eine besonders einfache Auswertung ergibt sich, wenn binäre Schwellwertvergleiche verwendet werden.

Als Resultat der erfindungsgemäßen Zustandserfassung wird ein Fehlersignal vorgesehen, wobei dies beispielsweise angezeigt oder verwendet werden kann, um bei Vorliegen des Fehlersignals den Elektroantrieb abzuschalten. Weiterhin kann bei Vorliegen des Fehlersignals eine Warnung abgegeben werden, beispielsweise akustisch oder optisch. Diese Maßnahmen können in beliebiger Weise kombiniert werden, beispielsweise kann bei Auftreten eines Fehlersignals eine Warnung abgegeben werden und der Elektroantrieb kann abgeschaltet werden. Hierbei kann anstatt der Warnung oder in Kombination hiermit das Fehlersignal angezeigt werden.

Der Vergleich des ersten Pedalantriebszustands mit dem zweiten Pedalantriebszustand kann vorgesehen werden, indem beispielsweise eine Kombination des ersten und des zweiten Pedalantriebszustands mit dem ersten Pedalantriebszustand einzeln oder mit dem zweiten Pedalantriebszustand einzeln verglichen wird. So kann beispielsweise zunächst eine Kombination des ersten und des zweiten Pedalantriebszustands vorgesehen werden, beispielsweise eine logische Kombination wie eine UND-Verknüpfung oder ODER-Verknüpfung, die wiederum mit einem einzelnen, d. h. mit dem zweiten Pedalantriebszustand verglichen wird bzw. logisch verknüpft wird. Dies ist ebenso auf arithmetischer Ebene möglich, wobei die Kombination hierbei beispielsweise als Produkt der Drehzahlsensorsignale vorgesehen wird.

Die letztgenannte Möglichkeit eignet sich insbesondere bei der Verwendung von Sensorsignalen, die eine Vielzahl von Werten oder einen kontinuierlichen Wertebereich einnehmen können, wobei das Produkt mit einem (beispielsweise normierten) Sensorsignal verglichen wird. Ist so beispielsweise die Drehzahl aufgrund eines Sensorfehlers null, jedoch das Drehmomentsensorsignal größer null, so ergibt sich als Produkt null. Wird dieses Produkt mit dem Drehmomentsensorsignal verglichen, so ergibt sich eine offensichtliche Diskrepanz, aus der auf einen Fehler geschlossen werden kann. Da beide Sensoren defekt sein können, bietet sich an, dass die Kombination sowohl mit dem einen als auch mit dem anderen Sensorsignal vorgesehen wird.

Wenn hingegen die Sensorsignale bereits mit einem Schwellwertvergleicher klassifiziert sind und somit nur zwei binäre Werte annehmen können (d. h. größer als Schwellwert oder kleiner als Schwellwert), dann bietet sich eine UND-Verknüpfung oder eine ODER-Verknüpfung an. Die Auswertung umfasst vorzugsweise eine Verknüpfung dieser Kombination mit dem einen (binären) Sensorsignal, wie auch mit dem anderen (binären) Sensorsignal. Im Sinne der Erfindung wird ein Ermitteln des ersten bzw. des zweiten Pedalantriebszustands anhand des zugehörigen Sensorsignals auch durch Ermitteln eines Pedalantriebszustands anhand einer Kombination der Sensorsignale vorgesehen, soweit die beiden Pedalantriebszustände auf unterschiedliche Weise ermittelt werden, beispielsweise anhand unterschiedlicher Kombinationen oder anhand unterschiedlicher einzelner Sensorsignale (Drehzahlsensorsignal bzw. Drehmomentsensorsignal).

Die erfindungsgemäße Ermittlung anhand eines Signals kann anhand des Signals selbst durchgeführt werden oder anhand von Kriterien des Signals (beispielsweise Spitzen-Spitzenwert oder Mittelwert oder Leistung oder Amplitude) oder kann anhand einer binär ausgewählten Form des Signals ausgeführt werden, wobei die Auswertung beispielsweise mit einem Schwellwertvergleich durchgeführt wird.

Die Erfindung wird ferner vorgesehen durch eine erfindungsgemäße Steuerungsvorrichtung, die zur Ausführung des Verfahrens eingerichtet ist. Die Steuerungsvorrichtung umfasst die Pedalsensoren, d. h. sowohl den Drehzahlsensor als auch den Drehmomentsensor. Eine Auswerteschaltung der Steuerungsvorrichtung weist einen Schwellwertvergleicher auf, der eingerichtet ist, das Signal des Drehzahlsensors, das Signal des Drehzahlsensors oder eine Kombination hiervon mit einem vorgegebenen Schwellwert zu vergleichen. Hierbei werden ein erster sowie ein zweiter Schwellwert vorgesehen, um die unterschiedlichen Signale bzw. Signalkombinationen auszuwerten. Beispielsweise wird das Signal des Drehzahlsensors mit einem ersten Schwellwert verglichen und das Signal des Drehzahlsensors wird mit einem zweiten Schwellwert verglichen. Hierbei ist der Schwellwertvergleicher eingerichtet, den ersten Schwellwert und den zweiten Schwellwert mit den jeweiligen Signalen oder Kombinationen der Signale zu vergleichen.

Als Resultat des Vergleichs wird der erste bzw. zweite Pedalantriebszustand von dem Schwellwertvergleicher vorgesehen, wobei der Schwellwertvergleicher somit einen Ausgang aufweist, der beide Pedalantriebszustände ausgibt. Dieser Ausgang ist vorzugsweise mit einer Fehlererfassungsschaltung der Auswerteschaltung verbunden, die die auf unterschiedliche Weise gewonnenen Pedalantriebszustände miteinander vergleicht. Hierzu weist die Fehlererfassungsschaltung einen Eingang auf, der mit dem Ausgang des Schwellwertvergleichers verbunden ist. Die Fehlererfassungsschaltung umfasst ferner einen Ausgang, der eingerichtet ist, bei unterschiedlichen Zuständen am Eingang der Fehlererfassungsschaltung ein Fehlersignal vorzusehen. Der Ausgang der Fehlerfassungsschaltung ist eingerichtet, mit dem Antrieb verbunden zu werden, um diesen bei Erfassung eines Fehlersignals auszuschalten.

Darüber hinaus kann der Ausgang der Fehlererfassungsschaltung eingerichtet sein, ein erfasstes Fehlersignal an eine optische und/oder akustische Anzeigevorrichtung auszugeben. Spezifische Ausführungsformen der erfindungsgemäßen Steuerungsvorrichtung umfassen auch eine derartige Anzeige bzw. auch eine Steuerung, die den Antrieb steuert und die eingerichtet ist, bei auftretendem Fehlersignal die Leistung des Antriebs zu reduzieren, vorzugsweise auf null.

Gemäß einer weiteren Ausführungsform umfasst die Steuerungsvorrichtung eine Spitzen-Spitzenwerterfassungsschaltung, die eingerichtet ist, eine Differenz zwischen einem relativen Minimum und einem relativen Maximum des jeweiligen Signals vorzusehen. Das jeweilige Signal stammt hierbei von einem der Sensoren oder von einer Kombinationsschaltung, die zur Kombination der Sensorsignale eingerichtet ist. Dadurch wird nicht das Sensorsignal selbst sondern eine daraus abgeleitete Signalform bewertet. Die Spitzen-Spitzenwerterfassungsschaltung ist mit einem Eingang des Schwellwertvergleichers verbunden, um diesem die abgewandelte Signalform zuzuleiten. Die Steuerungsvorrichtung kann ferner eine Mittelungsschaltung umfassen, die mit den Sensoren verbunden ist oder die mit einer Kombinationsschaltung verbunden ist, die zur Kombination der Sensorsignale eingerichtet ist. Die Mittelungsschaltung ist eingerichtet, einen zeitlichen Mittelwert des eingegebenen Signals (des Sensorsignals oder eines kombinierten Sensorsignals) zu bilden. Die Mittelungsschaltung ist ebenso mit einem Eingang des Schwellwertvergleichers verbunden, um mit diesem die durch Mittelung abgewandelte Signalform zuzuleiten. Sowohl Mittelwert als auch Spitzen-Spitzenwert sind Charakteristika der Signalform, anhand derer sich ein Fehler der Sensoren besonders gut erkennen lässt.

Eine weitere Ausführungsform der Steuerungsvorrichtung berücksichtigt den Antriebszustand des Elektroantriebs, indem dieser eine Leitung (beispielsweise einen Anschluss oder eine Zwischensignaldurchleitung) umfasst. Diese trägt ein Signal bzw. ist mit einem Pegel beaufschlagt, der den Antriebszustand des Elektroantriebs kennzeichnet, beispielsweise ein binäres An-/Aussignal oder einen Leistungswert des Antriebs. Komponenten der Steuerungsvorrichtung, insbesondere die Auswerteschaltung oder die Fehlererfassungsschaltung sind mit dieser Leitung verbunden und eingerichtet, nur bei einem aktiven Antriebszustand des Elektroantriebs zu arbeiten. Derartige Komponenten umfassen somit mindestens einen Enable-Eingang, der dazu führt, dass entweder der Vergleich, die Erfassung oder die Fehlersignalabgabe nur dann ausgeführt wird, wenn der Enable-Eingang einen bestimmten Pegel aufweist.

Auf diese Weise wird die Fehlererfassung oder Fehlersignalabgabe unterdrückt, wenn der Elektroantrieb nicht aktiv ist. Der Antriebszustand des Elektroantriebs kann jedoch auch auf andere Weise in die logische Verknüpfung oder Kategorisierung (mittels Schwellwertvergleich) der Eingangsgrößen einfließen, beispielsweise, indem die Schwellwerte für unterschiedliche Antriebszustände des Elektroantriebs verschieden sind, um ein Norm-Fahrsituationen zu unterscheiden.

Die Steuerungsvorrichtung kann realisiert sein mittels einer fest verdrahteten Logikschaltung, mittels eines Prozessors und zugehöriger Software oder einer Kombination hiervon. Vorzugsweise wird ein Mikroprozessor oder ein Mikrocontroller verwendet, der einige oder alle Komponenten der Steuerungsvorrichtung mittels Software umsetzt. Die Ein- bzw. Ausgänge können daher in Form von elektrischen Anschlüssen vorliegen oder auch als Eingabe- oder Ausgabeparameter eines Softwareabschnitts, beispielsweise eines Softwaremoduls oder einer Funktion vorgesehen sein. Die Verbindung wird dann durch Abruf bzw. Speichern der gleichen Speicherzelle vorgesehen. In gleicher Weise können Verfahrensschritte mit einer fest verdrahteten Logikschaltung, einem Prozessor und zugehöriger Software oder einer Kombination hiervon ausgeführt werden. Insbesondere können Verfahrensschritte oder Vorrichtungskomponenten lediglich als Software vorliegen, die von einem Prozessor verarbeitet wird. Komponenten der Erfindung, die als Schaltung bezeichnet werden, werden somit umgesetzt durch den Prozessor, wobei sich die spezifischen Funktionen aus dem Zusammenwirken von Prozessor und Software ergeben.

### Kurze Beschreibung der Figur

Ein Ausführungsbeispiel der Erfindung ist in der Figur dargestellt und wird in der nachfolgenden Beschreibung näher erläutert.

Es zeigt:

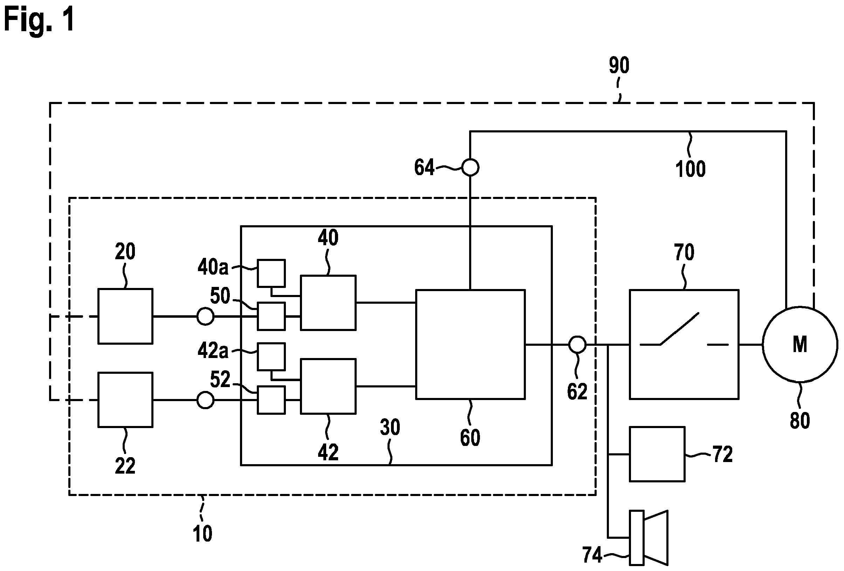

Die Figur 1 eine erfindungsgemäße Steuerungsvorrichtung mit zugehöriger Peripherie.

### Ausführungsbeispiele

In der Figur 1 ist eine Steuerungsvorrichtung 10 dargestellt, die einen Drehmomentsensor 20 und einen Drehzahlsensor 22 umfasst. Die Sensoren 20 und 22 sind an eine Auswerteschaltung 30 angeschlossen. Die Auswerteschaltung 30 umfasst zwei Schwellwertvergleicher 40, die jeweils einem Drehzahlsensor zugeordnet sind. Alternative Ausführungsformen können nur einen Schwellwertvergleicher aufweisen, der den Vergleich für beide Sensoren 20, 22 übernimmt. In der in Figur 1 dargestellten Ausführungsform ist an den ersten Schwellwertvergleicher 40 eine erste Schwellwertvorgabe 40a angeschlossen und an dem zweiten Schwellwertvergleicher 42 ist eine zweite Schwellwertvorgabe 42a angeschlossen.

In der in Figur 1 dargestellten Ausführungsform ist der Drehzahlsensor 20 über eine Spitzen-Spitzenwerterfassungsschaltung 50 an den ersten Schwellwertvergleicher 40 angeschlossen und der Drehzahlsensor 22 ist über eine Spitzen-Spitzenwerterfassungsschaltung 52 an dem zweiten Schwellwertvergleicher 42 angeschlossen. In einer bevorzugten Ausführungsform ist nur der Drehzahlmesser über eine Spitzen-Spitzenwerterfassungsschaltung an den Schwellwertvergleicher angeschlossen, wobei der Drehzahlsensor unmittelbar an den zugehörigen Schwellwertvergleicher angeschlossen ist. Sowohl die Sensoren 20, 22 als auch die Schwellwertvorgaben 40a, 42a sind an jeweilige Eingänge der Schwellwertvergleicher 40, 42 angeschlossen, um jeweils einen Sensorwert mit einer Schwellwertvorgabe zu vergleichen. Die Auswerteschaltung 30 umfasst ferner eine Fehlererfassungsschaltung 60, die die beiden Ergebnisse der beiden Schwellwertvergleicher 40, 42 gegeneinander abschätzt. Die Ausgaben der Schwellwertvergleicher 40, 42 entsprechen den Pedalantriebszuständen. Sind diese beiden unterschiedlich, so gibt die Fehlererfassungsschaltung an einem Ausgang 62 ein Fehlersignal aus, um eine daran angeschlossene Ansteuerung 70 des Elektroantriebs 80 an- oder auszuschalten. Als alternative Peripheriegeräte sind eine Anzeige 72 oder ein akustischer Signalgeber 74, die anstatt oder in Kombination mit der Ansteuerung 70 an den Ausgang der Fehlererfassungsschaltung angeschlossen werden können, möglich. Der Ausgang der Fehlererfassungsschaltung sieht das Fehlersignal vor.

Der Antrieb 70 ist mechanisch mit den Sensoren 20, 22 gekoppelt, soweit der Freilauf des Fahrrads geschlossen ist. Die zugehörige mechanische Verbindung ist durch die gestrichelte Linie 90 dargestellt. Antrieb 80 und Sensoren 20, 22 sind nur mittelbar miteinander mechanisch verbunden, wobei die Sensoren 20 und 22 unmittelbar mit der Kurbelwelle bzw. den Pedalen des Fahrrads verbunden sind und der Antrieb 80 nur dann mit den Pedalen verbunden ist, wenn die Pedale entsprechend betätigt werden.

Um zu erkennen, ob der Antrieb 80 aktiv ist, ist der Antrieb 80 über eine Leitung 100 mit der Fehlererfassungsschaltung 60 verbunden, um die Ausgabe eines Fehlersignals am Ausgang 62 zu unterbinden, wenn der Antrieb 80 nicht aktiv ist. Die Leitung 100 überträgt ein Signal, das den Aktivierungszustand des Antriebs 80 wiedergibt, an die Fehlererfassungsschaltung 60. Alternativ kann das Aktivierungssignal auch von der Ansteuerung 70 stammen. Ferner kann der Anschluss 64 der Fehlererfassungsschaltung 60 auch ein allgemeiner Enable-Anschluss der Steuerungsvorrichtung 10 sein, um diese nur dann zu aktivieren, wenn der elektrische Antrieb eingeschaltet ist. Dadurch arbeitet die Steuerungsvorrichtung nur dann, wenn ein aktiver Antriebszustand des Elektroantriebs 80 vorliegt.

Die oben anhand der Figur 1 beschriebene Schaltung geht von einer fest verdrahteten Schaltung aus. Jedoch wird vorzugsweise die beschriebene Schaltung mittels eines programmierbaren Prozessors und zugehöriger Software umgesetzt, so dass die in Figur 1 dargestellten Schaltungskomponenten als Programmblöcke zu interpretieren sind, die als Komponenten der Software realisiert sind. Bei einer Umsetzung mittels Software ergeben sich jedoch die gleichen Zusammenhänge zwischen den einzelnen Signalen und Zuständen, so dass jede Schalungskomponente der Figur 1 und deren Verbindung mit einer anderen Komponente umgesetzt sein kann, die mit weiteren entsprechenden Softwarekomponenten interagiert.

In einer alternativen Ausführungsform wird beim Auftreten eines Fehlersignals nicht die Ansteuerung des Motors geschaltet, sondern eine Energiequelle, insbesondere ein Akkumulator, wird von der Ansteuerung 70 bzw. von dem Elektroantrieb 80 getrennt.

## Patentansprüche

1. Verfahren zur Zustandserfassung von Pedalsensoren (20, 22) eines Fahrrads mit Elektroantrieb (80), mit den Schritten:
• Vorsehen eines Drehzahlsensorsignals mittels eines Drehzahlsensors (20) der Pedalsensoren, um die vom Fahrer auf die Pedale erzeugte Drehzahl zu erfassen;
• Vorsehen eines Drehmomentsensorsignals mittels eines Drehmomentsensors (22) der Pedalsensoren, um das vom Fahrer auf die Pedale erzeugte Drehmoment zu erfassen;
• Ermitteln eines ersten Pedalantriebzustands anhand des Drehzahlsensorsignals und eines zweiten Pedalantriebzustands anhand des Drehmomentsensorsignals;
• Vergleichen des ersten Pedalantriebzustands mit dem zweiten Pedalantriebzustand und
• Vorsehen eines Fehlersignals, wenn sich der erste Pedalantriebzustand von dem zweiten Pedalantriebzustand unterscheidet,
wobei das Verfahren durchgeführt wird, wenn das Elektrofahrrad mit dem Elektroantrieb (80) angetrieben wird.

2. Verfahren nach Anspruch 1, wobei als erster Pedalantriebzustand ein aktiver Pedalantrieb angenommen wird, wenn das Drehzahlsensorsignal über einem vorgegebenen Mindestdrehzahlschwellwert liegt, und andernfalls ein fehlender Pedalantrieb angenommen wird, und wobei als zweiter Pedalantriebzustand ein aktiver Pedalantrieb angenommen wird, wenn das Drehmomentsensorsignal über einem vorgegebenen Mindestdrehmomentschwellwert liegt, und andernfalls ein fehlender Pedalantrieb angenommen wird.

3. Verfahren nach einem der vorangehenden Ansprüche, wobei als Drehmomentsensorsignal ein zeitlich gemittelter Drehmomentwert oder ein Spitzen-Spitzenwert, der die Differenz zwischen einem relativen Maximum und einem relativen Minimum eines Momentan-Drehmomentsignals des Drehmomentsensors (22) wiedergibt, vorgesehen wird, oder wobei der zweite Pedalantriebzustand anhand eines zeitlich gemittelten Drehmomentsensorsignals oder anhand des Spitzen-Spitzenwerts des Momentan-Drehmomentsignals des Drehmomentsensors (22) ermittelt wird.

4. Verfahren nach einem der vorangehenden Ansprüche, wobei als Drehzahlsensorsignal ein zeitlich gemittelter Drehzahlwert oder ein Spitzen-Spitzenwert, der die Differenz zwischen einem relativen Maximum und einem relativen Minimum eines Momentan-Drehzahlsignals des Drehzahlsensors (20) wiedergibt, vorgesehen wird, oder wobei der erste Pedalantriebszustand anhand eines zeitlich gemittelten Drehzahlsensorsignals oder anhand des Spitzen-Spitzenwerts des Momentan-Drehzahlsignals des Drehzahlsensors (20) ermittelt wird.

5. Verfahren nach einem der vorangehenden Ansprüche, wobei das Fehlersignal angezeigt wird, bei Vorliegen des Fehlersignals eine Warnung akustisch oder optisch abgegeben wird oder bei Vorliegen des Fehlersignals der Elektroantrieb (80) abgeschaltet wird oder eine Kombination dieser Maßnahmen.

6. Verfahren nach einem der vorangehenden Ansprüche, wobei der erste oder der zweite Pedalbetriebszustand anhand einer arithmetischen oder logischen Kombination des Drehzahlsensorsignals mit dem Drehmomentsensorsignal, insbesondere eines Produkts oder einer UND-Verknüpfung oder einer ODER-Verknüpfung des Drehzahlsensorsignals mit dem Drehmomentsensorsignal, vorgesehen wird.

7. Steuerungsvorrichtung, eingerichtet zur Steuerung eines Elektroantriebs (80) eines Elektrofahrrads, wobei die Steuerungsvorrichtung (10)
• Pedalsensoren (20, 22) umfasst, die zur Erfassung von Drehzahl und Drehmoment eines Pedalantriebs eingerichtet sind, und
• eine Auswerteschaltung (30) umfasst, die einen Schwellwertvergleicher (40, 42) aufweist, welcher durch Vergleich des Signals des Drehzahlsensors mit einem ersten Schwellwert einen ersten Pedalantriebzustand und durch Vergleich des Signals des Drehmomentsensors mit einem zweiten Schwellwert einen zweiten Pedalantriebszustand erfasst; wobei die Auswerteschaltung (30) ferner eine Fehlererfassungsschaltung (60) aufweist, die eingerichtet ist, den ersten Pedalantriebzustand mit dem zweiten Pedalantriebzustand zu vergleichen und bei unterschiedlichen Zuständen ein Fehlersignal vorsieht und
• eine Leitung (100) umfasst, die ein Signal (64) vorhält, das den Antriebszustand des Elektroantriebs (80) kennzeichnet, wobei die Auswerteschaltung (30) oder Fehlererfassungsschaltung (60) mit der Leitung (100) verbunden ist,
**dadurch gekennzeichnet, dass**
• die Auswerteschaltung (30) eingerichtet ist, nur bei einem aktiven Antriebszustand des Elektroantriebs (80) zu arbeiten.

8. Steuerungsvorrichtung nach Anspruch 7, die ferner eine Spitzen-SpitzenwertErfassungsschaltung (50, 52) umfasst, die eingerichtet ist, eine Differenz zwischen einem relativen Minimum und einem relativen Maximum des jeweiligen Signals zumindest eines der Sensoren vorzusehen und an einen Eingang des Schwellwertvergleichers (40, 42) zu leiten, oder die eine Mittelungsschaltung umfasst, die eingerichtet ist, einen zeitlichen Mittelwert des jeweiligen Signals zumindest eines der Sensoren (20, 22) vorzusehen und an den Eingang des Schwellwertvergleichers zu leiten.

9. Steuerungsvorrichtung nach Anspruch 7 oder 8, wobei die Auswerteschaltung (30) zwei Schwellwertvergleicher (40, 42) umfasst, wobei an den ersten Schwellwertvergleicher (40) eine erste Schwellwertvorgabe (40a) und an den zweiten Schwellwertvergleicher (42) eine zweite Schwellwertvorgabe (42a) angeschlossen ist, wobei die Ausgaben der Schwellwertvergleicher (40, 42) den Pedalantriebszuständen entsprechen.

10. Steuerungsvorrichtung nach einem der Ansprüche 7 bis 9, wobei der Schwellwertvergleicher (40, 42)
• als ersten Pedalantriebzustand einen aktiven Pedalantrieb ausgibt, wenn das Drehzahlsensorsignal über einem vorgegebenen Mindestdrehzahlschwellwert liegt, und andernfalls einen fehlenden Pedalantrieb ausgibt, und
• als zweiten Pedalantriebzustand einen aktiven Pedalantrieb ausgibt, wenn das Drehmomentsensorsignal über einem vorgegebenen Mindestdrehmomentschwellwert liegt, und andernfalls ein fehlender Pedal antrieb ausgibt.

## Claims

1. Method for detecting the state of pedal sensors (20, 22) of a bicycle with an electric drive (80), comprising the steps:
• providing a rotational speed sensor signal by means of a rotational speed sensor (20) of the pedal sensors in order to detect the rotational speed generated at the pedals by the driver;
• providing a torque sensor signal by means of a torque sensor (22) of the pedal sensors in order to detect the torque generated at the pedals by the driver;
• determining a first pedal drive state on the basis of the rotational speed sensor signal and a second pedal drive state on the basis of the torque sensor signal;
• comparing the first pedal drive state with the second pedal drive state; and
• providing a fault signal if the first pedal drive state differs from the second pedal drive state,
wherein the method is carried out when the electric bicycle is driven with the electric drive (80).

2. Method according to Claim 1, wherein an active pedal drive is assumed as a first pedal drive state if the rotational speed sensor signal is above a predefined minimum rotational speed threshold value and otherwise an absence of pedal drive is assumed, and wherein an active pedal drive is assumed as a second pedal drive state if the torque sensor signal is above a predefined minimum torque threshold value, and otherwise a lack of pedal drive is assumed.

3. Method according to one of the preceding claims, wherein a chronologically averaged torque value or a peak-to-peak value which represents the difference between a relative maximum and a relative minimum of an instantaneous torque signal of the torque sensor (22) is provided as the torque sensor signal, or wherein the second pedal drive state is determined on the basis of a chronologically averaged torque sensor signal or on the basis of the peak-to-peak value of the instantaneous torque signal of the torque sensor (22).

4. Method according to one of the preceding claims, wherein a chronologically averaged rotational speed value or a peak-to-peak value which represents the difference between a relative maximum and a relative minimum of an instantaneous rotational speed signal of the rotational speed sensor (20) is provided as the rotational speed sensor signal, or wherein the first pedal drive state is determined on the basis of a chronologically averaged rotational speed sensor signal or on the basis of the peak-to-peak value of the instantaneous rotational speed signal of the rotational speed sensor (20).

5. Method according to one of the preceding claims, wherein the fault signal is indicated, when the fault signal is present a warning is output acoustically or visually, or when the fault signal is present the electric drive (80) is switched off, or a combination of these measures.

6. Method according to one of the preceding claims, wherein the first or the second pedal operating state is provided on the basis of an arithmetic or logical combination of the rotational speed sensor signal with the torque sensor signal, in particular a product or an AND logical combination or an OR logical combination of the rotational speed sensor signal with the torque sensor signal.

7. Control device, designed to control an electric drive (80) of an electric bicycle, wherein the control device (10) comprises
• pedal sensors (20, 22) which are designed to detect the rotational speed and torque of a pedal drive, and
• an evaluation circuit (30) which has a threshold value comparator (40, 42) which detects a first pedal drive state by comparison of the signal of the rotational speed sensor with a first threshold value, and a second pedal drive state by comparison of the signal of the torque sensor with a second threshold value; wherein the evaluation circuit (30) also has a fault-detection circuit (60) which is designed to compare the first pedal drive state with the second pedal drive state, and provides a fault signal when the states are are different, and
• a line (100) which keeps available a signal (64) which characterizes the drive state of the electric drive (80), wherein the evaluation circuit (30) or the fault-detection circuit (60) is connected to the line (100),
**characterized in that**
• the evaluation circuit (30) is designed to operate only when there is an active drive state of the electric drive (80).

8. Control device according to Claim 7, which also comprises a peak-to-peak value-detection circuit (50, 52) which is designed to provide a difference between a relative minimum and a relative maximum of the respective signal of at least one of the sensors and to conduct said difference to an input of the threshold value comparator (40, 42), or which comprises an averaging circuit which is designed to provide a chronological average value of the respective signal of at least one of the sensors (20, 22) and to conduct said chronological average value to the input of the threshold value comparator.

9. Control device according to Claim 7 or 8, wherein the evaluation circuit (30) comprises two threshold value comparators (40, 42), wherein a first threshold value predefining means (40a) is connected to the first threshold value comparator (40), and a second threshold value predefining means (42a) is connected to the second threshold value comparator (42), wherein the outputs of the threshold value comparators (40, 42) correspond to the pedal drive states.

10. Control device according to one of Claims 7 to 9, wherein the threshold value comparator (40, 42)
• outputs an active pedal drive as a first pedal drive state if the rotational speed sensor signal is above a predefined minimum rotational speed threshold value, and otherwise outputs an absence of the pedal drive, and
• outputs an active pedal drive as a second pedal drive state if the torque sensor signal is above a predefined minimum torque threshold value, and otherwise outputs an absence of a pedal drive.

## Revendications

1. Procédé destiné à la reconnaissance de l'état des capteurs de pédalier (20, 22) d'une bicyclette équipée d'un entraînement électrique (80), lequel procédé comprend les phases suivantes :
• la mise en oeuvre d'un signal de capteur de nombre de tours au moyen d'un capteur de nombre de tours (20) des capteurs de pédalier, en vue de détecter le nombre de tours généré par le cycliste sur les pédales ;
• la mise en oeuvre d'un signal de capteur de couple au moyen d'un capteur de couple (22) des capteurs de pédalier, en vue de détecter le couple généré par le cycliste sur les pédales ;
• la détermination d'un premier état d'entraînement du pédalier à l'aide du signal de capteur de nombre de tours et d'un deuxième état d'entraînement du pédalier à l'aide du signal de capteur de couple ;
• la comparaison du premier état d'entraînement du pédalier avec le deuxième état d'entraînement du pédalier ; et
• la mise en oeuvre d'un signal d'erreur, quand le premier état d'entraînement du pédalier est différent du deuxième état d'entraînement du pédalier ;
dans lequel le procédé est réalisé quand la bicyclette électrique est entraînée au moyen de l'entraînement électrique (80).

2. Procédé selon la revendication 1, dans lequel un entraînement actif du pédalier est pris en compte sous la forme d'un premier état d'entraînement du pédalier, quand le signal de capteur de nombre de tours se situe au-dessus d'une valeur de seuil du nombre de tours minimale, prédéterminée, ou sinon une absence de l'entraînement du pédalier est prise en compte ; et
dans lequel un entraînement du pédalier actif est pris en compte sous la forme d'un deuxième état d'entraînement du pédalier, quand le signal de capteur de couple se situe au-dessus d'une valeur de seuil de couple minimale, prédéterminée, ou sinon une absence de l'entraînement du pédalier est prise en compte.

3. Procédé selon l'une des revendications précédentes, dans lequel une valeur de couple pondérée dans le temps ou une valeur de crête maximale est prévue sous la forme d'un signal de capteur de couple, laquelle valeur reproduit la différence entre une valeur maximale relative et une valeur minimale relative d'un signal de couple instantané du capteur de couple (22) ; ou
dans lequel le deuxième état d'entraînement du pédalier est déterminé à l'aide d'un signal de capteur de couple pondéré dans le temps ou à l'aide de la valeur de crête maximale du signal de couple instantané du capteur de couple (22).

4. Procédé selon l'une des revendications précédentes, dans lequel une valeur de nombre de tours pondérée dans le temps ou une valeur de crête maximale est prévue sous la forme d'un signal de capteur de nombre de tours, laquelle valeur reproduit la différence entre une valeur maximale relative et une valeur minimale relative d'un signal instantané du nombre de tours du capteur de nombre de tours (20) ; ou dans lequel le premier entraînement de l'état du pédalier est déterminé à l'aide d'un signal de capteur de nombre de tours pondéré dans le temps ou à l'aide de la valeur de crête maximale du signal instantané du nombre de tours du capteur de nombre de tours (20).

5. Procédé selon l'une des revendications précédentes, dans lequel le signal d'erreur est affiché et une alarme est émise de manière acoustique ou optique en présence du signal d'erreur, ou l'entraînement électrique (80) est mis hors circuit en présence du signal d'erreur, ou une combinaison de ces mesures est réalisée.

6. Procédé selon l'une des revendications précédentes, dans lequel le premier ou le deuxième état de fonctionnement du pédalier est mis en oeuvre à l'aide d'une combinaison arithmétique ou logique du signal de capteur de nombre de tours avec le signal de capteur de couple, en particulier à l'aide d'un produit ou d'une liaison de type « ET » ou d'une liaison de type « OU » du signal de capteur de nombre de tours avec le signal de capteur de couple.

7. Dispositif de commande, lequel est configuré en vue de la commande d'un entraînement électrique (80) d'une bicyclette électrique, dans lequel le dispositif de commande (10) :
• comprend des capteurs de pédalier (20, 22), lesquels sont paramétrés en vue de la détermination du nombre de tours et du couple d'un entraînement du pédalier ; et
• comprend un circuit d'évaluation (30), lequel présente un comparateur de la valeur de seuil (40, 42) qui permet de déterminer un premier état d'entraînement du pédalier, par la comparaison du signal du capteur de nombre de tours avec une première valeur de seuil, ainsi qu'un deuxième état d'entraînement du pédalier, par la comparaison du signal du capteur de couple avec une deuxième valeur de seuil ;
dans lequel le circuit d'évaluation (30) présente en outre un circuit de reconnaissance des erreurs (60), lequel est configuré en vue de comparer le premier état d'entraînement du pédalier avec le deuxième état d'entraînement du pédalier et met en oeuvre un signal d'erreur quand les états sont différents ; et
• comprend une ligne (100) qui place en réserve un signal (64), lequel caractérise l'état d'entraînement de l'entraînement électrique (80) ; dans lequel le circuit d'évaluation (30) ou le circuit de reconnaissance des erreurs (60) est connecté à la ligne (100) ;
**caractérisé en ce que**
• le circuit d'évaluation (30) est configuré en vue de ne travailler qu'en cas d'un état d'entraînement actif de l'entraînement électrique (80).

8. Dispositif de commande selon la revendication 7, lequel comprend en outre un circuit de reconnaissance d'une valeur de crête maximale (50, 52) qui est configuré en vue de mettre en oeuvre une différence entre une valeur minimale relative et une valeur maximale relative du signal respectif de tout au moins l'un des capteurs et de la diriger vers une entrée du comparateur de la valeur de seuil (40, 42) ; ou
lequel comprend un circuit de pondération qui est configuré en vue de mettre en oeuvre une valeur moyenne temporelle du signal respectif de tout au moins l'un des capteurs (20, 22) et de la diriger vers l'entrée du comparateur de la valeur de seuils.

9. Dispositif de commande selon la revendication 7 ou 8, dans lequel le circuit d'évaluation (30) comprend deux comparateurs de la valeur de seuil (40, 42), dans lequel une première valeur de seuil de consigne (40a) est reliée au premier comparateur de la valeur de seuil (40) et une deuxième valeur de seuil de consigne (42a) est reliée au deuxième comparateur de la valeur de seuil (42), dans lequel les données émises par le comparateur de la valeur de seuil (40, 42) correspondent aux états d'entraînement du pédalier.

10. Dispositif de commande selon l'une des revendications 7 à 9, dans lequel le comparateur de la valeur de seuil (40, 42) :
• émet un entraînement actif du pédalier sous la forme d'un premier état d'entraînement du pédalier, quand le signal de capteur de nombre de tours se situe au-dessus d'une valeur de seuil du nombre de tours minimale, prédéterminée ou émet sinon une absence d'entraînement du pédalier ; et
• émet un entraînement actif du pédalier sous la forme d'un deuxième état d'entraînement du pédalier, quand le signal de capteur de couple se situe au-dessus d'une valeur de seuil de couple minimale, prédéterminée ou émet sinon une absence d'entraînement du pédalier.
